# EUROPÄISCHE PATENTSCHRIFT

(11) **EP 3 560 314 B1**
(45) Veröffentlichungstag und Bekanntmachung des Hinweises auf die Patenterteilung: **30.10.2024**
(21) Anmeldenummer: 19169583.2
(22) Anmeldetag: 16.04.2019
(51) Int. Cl.: A01D 41/14, A01D 57/03

(54) **SCHNEIDWERK MIT SELBSTTÄTIGER EINSTELLUNG DER HASPELZINKENORIENTIERUNG**
HEADER WITH AUTONOMOUS ADJUSTMENT OF REEL TINES ORIENTATION
MÉCANISME DE COUPE À RÉGLAGE AUTOMATIQUE DE L'ORIENTATION DE DENT DE RABATTEUR

(30) Priorität: 26.04.2018 DE 102018206507
(43) Veröffentlichungstag der Anmeldung: 30.10.2019
(73) Patentinhaber: Deere & Company, Moline, IL 61265 (US)
(72) Erfinder: Fries, Christina, 68163 Mannheim (DE); Lauer, Friedrich, 68163 Mannheim (DE); Loutz, Eric, 68163 Mannheim (DE); Bischoff, Lutz, 68163 Mannheim (DE); Klein, Oliver, 68163 Mannheim (DE)
(74) Vertreter: Holst, Sönke

(56) Entgegenhaltungen:
- EP-A1- 0 812 530
- EP-A1- 1 297 735
- WO-A1-2016/101059
- DE-A1- 102016 202 628
- DE-A1- 2 411 153
- DE-B- 1 047 516
- US-A1- 2013 160 418
- US-B2- 8 800 256

## Beschreibung

Die vorliegende Erfindung bezieht sich auf eine Erntemaschine mit einem Schneidwerk, welches mit einem Messerbalken zum Abschneiden von Erntegut von einem Feld, einer oberhalb des Messerbalkens angeordneten Haspel mit Haspelzinken und einem Querförderer zur Abförderung des abgeschnittenen Ernteguts zu einer rückwärtigen Abgabeöffnung ausgestattet ist, wobei die Haspel um eine Drehachse in Antrieb versetzbare Haspelarme, an den Haspelarmen um ihre Längsachsen drehbar abgestützte Haspelzinkenträger mit daran angebrachten Haspelzinken und einen fremdkraftbetätigten, mit einer elektronischen Steuereinheit verbundenen Aktor zur Verstellung des Drehwinkels der Haspelzinkenträger gegenüber den Haspelarmen umfasst und die elektronische Steuereinheit betreibbar ist, den Aktor abhängig von wenigstens einer Eigenschaft des zu erntenden Ernteguts zu verstellen.

### Stand der Technik

Schneidwerke dienen in der Landwirtschaft als Erntevorsätze für selbstfahrende Erntemaschinen bei der Getreideernte, in der Regel für Mähdrescher, obwohl sie auch als Erntevorsatz für Feldhäcksler verwendet werden können, beispielsweise bei der Ernte von Ganzpflanzensilage. Schneidwerke umfassen einen Messerbalken, eine darüber angeordnete Haspel und einen Querförderer, der das abgeschnittene Erntegut an einen Schrägförderer des Mähdreschers oder Einzugsförderer des Feldhäckslers abgibt. Die Haspel dient dazu, in den stehenden Bestand des Ernteguts einzugreifen und ihn nach hinten zu fördern, damit es durch den Messerbalken abgeschnitten und vom Querförderer erfasst werden kann. Die Haspel umfasst üblicherweise eine Anzahl an Haspelzinkenträgern, die an Haspelarmen angebracht sind, die ihrerseits um eine mittige, sich in Querrichtung erstreckende Achse in Drehung versetzbar sind. An den Haspelzinkenträgern sind Haspelzinken angebracht. Da die Haspelzinkenträgern gegenüber den Haspelarmen drehbar gelagert sind, ist die Orientierung der Finger über einen Umlauf im Stand der Technik nicht radial zur Drehachse der Haspelarme, sondern im Wesentlichen nach unten orientiert, was durch eine geeignete Steuerung erzielt wird, die beispielsweise unter Verwendung von Nockenbahnen (US 6 170 244 B1) oder Ketten (DE 1 047 516 B) oder Zahnrädern (WO 2016/101059 A1) eine in geeigneter Weise geformte Vorgabeeinrichtung z.B. in Form einer Steuerkurve abtasten kann.

Die Ernte von Druschfrüchten mit hoher Durchsatzleistung und in hoher Qualität beginnt am Schneidwerk. Die Haspel unterstützt die Aufnahme von Getreide und die richtige Anwendung trägt wesentlich zu einem gleichmäßigen Materialfluss und zu geringen Schneidwerksverluste bei. Im umgedrehten Fall können aber bei falscher Einstellung der Parameter hohe Schneidwerksverluste entstehen und durch ungleichmäßigen Materialfluss die Funktion aller nachfolgenden Drusch- und Abscheideorgane negativ beeinträchtigt werden wobei die Effizienz des gesamten Mähdreschers sinkt. Die richtige Anpassung aller verstellbaren Haspelparameter erfordert von dem Maschinenbediener viel Erfahrung.

Des Weiteren sind durch verbesserte Pflanzenbaumaßnahmen Bestände mit gleichmäßigen Störungen über größere Flächen eher selten (z.B. Lagergetreide), jedoch Felder mit unterschiedlichen Bestandseigenschaften in nebeneinanderliegenden Teilflächen häufiger (z.B. witterungsbedingt oder durch Wild nieder gedrücktes Getreide). Der Bediener müsste dann in kurzer Zeit mehrerer Haspelparameter gleichzeitig einstellen. Auf Grund immer höhere Erntegeschwindigkeiten und immer breiterer Schneidwerke wird das immer schwerer.

Oftmals sieht man im Feld Streifen mit Lagergetreide. Diese Streifen können durch Überlappung bei der Düngerausbringung verursacht sein. Die partielle Überdüngung kann zu Lagergetreide führen. Solche Lagerstellen, die sich nicht über die gesamte Schneidwerksbreite erstrecken, sind besonders schwer zu handhaben. Die Einstellung des Schneidwerkes kann dann immer nur ein Kompromiss bezüglich dem normal stehenden Getreide und dem liegenden Getreide sein, wobei auch hier eine schnelle Anpassung von mehreren Einstellparametern erforderlich ist.

Als verstellbare Größen der Haspel sind die Drehzahl, die Höhe und die Vorwärtsposition zu nennen. Im Stand der Technik wurde schon eine selbsttätige Einstellung dieser Größen basierend auf sensierten Erntegutparametern, wie Bestandshöhe, vorgeschlagen (EP 2 517 549 A1, DE 10 2016 118 637 A1), oder eine von der Schnitthöhe abhängige Einstellung dieser Größen (EP 0 812 530 A1) oder eine Verstellung der Position der Haspel bei Schneidwerksverlusten, die mittels einer Kamera erkannt werden (DE 10 2016 202 628 A1). Weiterhin beschreibt die DE 10 2016 215 197 A1 eine selbsttätige Einstellung eines nicht näher definierten Arbeitsparameters eines Erntevorsatzes im Falle einer sensorischen Erkennung von Lagergetreide.

Eine weitere, verstellbare Größe des Schneidwerks ist die Orientierung der Haspelzinken um die Drehachse der Haspelzinkenträger. Im Stand der Technik wird diese Einstellung durch eine mechanische Verstellung eines an der Haspel angebrachten Hebels durchgeführt (vgl. beispielsweise DE 1 047 516 B), um die Orientierung der Haspelzinken an die Erntegutart und -bedingungen anzupassen. Eine Änderung während des Erntevorgangs ist demnach nicht bzw. nur unter hohem zeitlichen Aufwand möglich, auch wenn sich die Bedingungen während der Ernte auf einem Feld ändern sollten. Die als gattungsbildend angesehene US 8 800 256 B2 beschreibt eine Haspelanordnung mit einem Haspelzinkenwinkelverstellring, der durch einen Aktor verstellbar ist, um den Winkel der Haspelzinken während des Umlaufs zu verstellen. Die Verstellung erfolgt durch einen Bediener in der Kabine des Mähdreschers oder selbsttätig basierend auf der Vortriebsgeschwindigkeit des Mähdreschers oder der Drehzahl der Haspel oder der Dichte des Ernteguts. Eine ferngesteuerte Verstellung der Orientierung der Haspelzinken wird auch in der EP 1 297 735 A1 erwähnt, jedoch mit der Bemerkung, dass eine Automatisierung der unabhängigen Verstellung der Drehwinkel aller Haspelzinkenträger aufgrund der hohen Komplexität weniger wünschenswert sein dürfte. Schließlich beschreibt die DE 24 11 153 A1 ein Schneidwerk eines Mähdreschers, bei dem die Höhe der Haspel mittels einer Lichtschranke selbsttätig an der Oberseite des Erntegutbestands geführt wird. Wird die Haspel bei Lagergetreide ganz nach unten geführt, erfolgt durch eine mechanische Zwangskopplung eine selbsttätige Verstellung des Winkels der Haspelzinken nach hinten, um das Erntegut besser aufnehmen zu können.

### Problem

Im Stand der Technik ist nach alledem vorgesehen, die Orientierung der Haspelzinken nur von Hand zu verändern oder (US 8 800 256 B2) sie allenfalls selbsttätig abhängig vom Durchsatz, der Dichte des Ernteguts oder anderen Feldbedingungen oder von der Vorwärtsgeschwindigkeit des Mähdreschers zu verstellen oder (DE 24 11 153 A1) mittels einer mechanischen Kopplung mit der Haspelhöhe bei Lagergetreide zu verstellen. Dadurch wird eine optimale Annahme von Erntegut nicht in allen Fällen erzielt. Es gibt zwar andere Parameter der Haspel, die im Stand der Technik bei Lagergetreide (EP 0 812 530 A1) oder Förderproblemen (DE 10 2016 202 628 A1) verstellt werden, jedoch wird dabei nicht die Orientierung der Haspelzinken variiert.

### Lösung

Eine Erntemaschine ist mit einem Schneidwerk ausgestattet, welches mit einem Messerbalken zum Abschneiden von Erntegut von einem Feld, einer oberhalb des Messerbalkens angeordneten Haspel mit Haspelzinken und einem Querförderer zur Abförderung des abgeschnittenen Ernteguts zu einer rückwärtigen Abgabeöffnung versehen ist. Die Haspel umfasst um eine Drehachse in Antrieb versetzbare Haspelarme, an den Haspelarmen um ihre Längsachsen drehbar abgestützte Haspelzinkenträger mit daran angebrachten Haspelzinken und einen fremdkraftbetätigten, mit einer elektronischen Steuereinheit verbundenen Aktor zur Verstellung des Drehwinkels der Haspelzinkenträger gegenüber den Haspelarmen. Die elektronische Steuereinheit ist betreibbar, den Aktor abhängig von wenigstens einer Eigenschaft des zu erntenden Ernteguts zu verstellen.

Die Eigenschaft des zu erntenden Ernteguts betrifft die Orientierung der Halme des Ernteguts, d.h. ob es sich um stehenden oder liegenden Bestand (Lagergetreide) handelt und im zweiten Fall ggf. auch die Richtung, in welcher das Lagergetreide liegt, und/oder eine Störung im Materialfluss des Ernteguts im Annahmebereich des Schneidwerks zwischen dem Messerbalken und dem Querförderer, insbesondere mögliche Förderprobleme am Messerbalken, am Querförderer oder dazwischen oder Wickeln der Haspel.

Das System ist besonders geeignet für die Aufnahme von Lagergetreide und erreicht die höchste Wirksamkeit in Zusammenhang mit einem optischen Sensor, welcher im Feld bereits vor dem Schneidwerk Stellen mit Lagergetreide und die Ausrichtung des Lagergetreides erkennen kann. Eine weitere Verbesserung ist möglich, wenn dieser oder ein zusätzlicher optischer Sensor auch den Bereich um den Messerbalken bis zur Querförderschnecke auf gleichmäßigen Materialfluss, bzw. auf Verstopfungen überwachen kann. Dieser Sensor soll auch erkennen, ob die Haspel zu wickeln beginnt, bzw. abgeschnittenes Getreide über die Haspel wieder nach vorn geworfen wird.

Die elektronische Steuereinheit ist mit einem Sensor zur Erkennung vor dem Schneidwerk befindlichen Lagergetreides und von dessen Orientierung und/oder einer abgespeicherten Karte, in der Positionen vor dem Schneidwerk befindlichen Lagergetreides und von dessen Orientierung abgespeichert sind und/oder einem Sensor zur Erkennung von Ungleichmäßigkeiten des Förderverhaltens des Ernteguts im Annahmebereich des Schneidwerks verbunden und betreibbar, den Aktor abhängig von der Karte und/oder den Signalen von mindestens einem der Sensoren anzusteuern.

Die elektronische Steuereinheit ist demnach betreibbar, den Aktor abhängig von der Anwesenheit und Orientierung von aufzunehmenden Lagergetreide anzusteuern. Alternativ oder zusätzlich besteht die Möglichkeit, die Stauung oder Verstopfung automatisch mit der Haspel zu lösen, falls ein Sensor Ungleichmäßigkeiten im Materialfluss des Ernteguts im Annahmebereich des Schneidwerks, d.h. im Bereich des Messerbalkens oder vor dem Querförderer erkennt.

Die Steuereinheit kann betreibbar sein, weitere Aktoren zur Verstellung der Schneidwerkshöhe und/oder der Position der Haspel in Vorwärtsrichtung und/oder der Position der Haspel in vertikaler Richtung und/oder der Geschwindigkeit der Drehung der Haspel basierend auf Signalen wenigstens eines Sensors und/oder in der Karte eingetragenen Daten anzusteuern.

Das Schneidwerk wird in Verbindung mit einer Erntemaschine verwendet, bei der es sich um einen Mähdrescher oder Feldhäcksler handeln kann.

### Ausführungsbeispiel

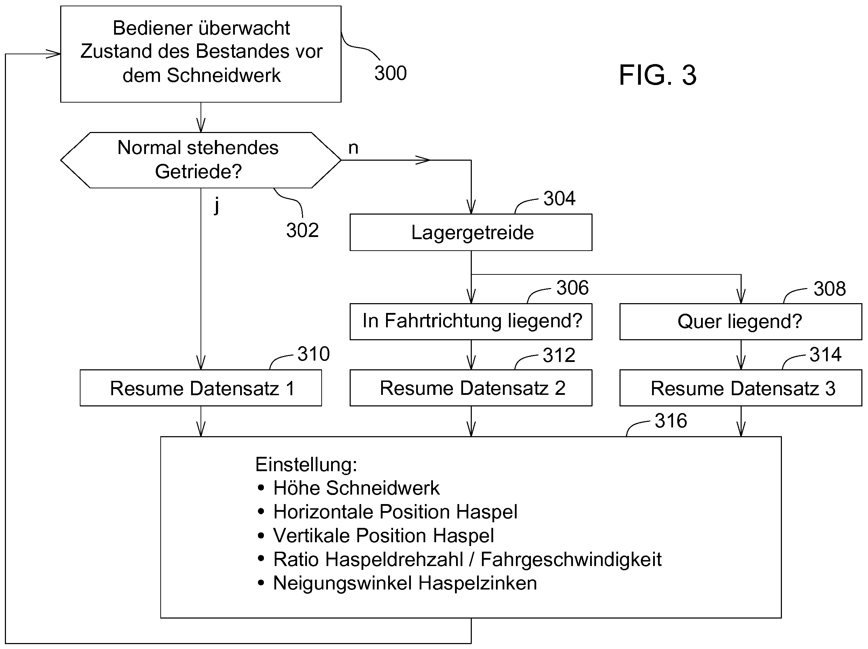

In den Zeichnungen sind zwei nachfolgend näher beschriebene Ausführungsbeispiele dargestellt, von denen die Ausführungsform nach Figur 3 nicht unter die Ansprüche fällt. Es zeigen:
- Fig. 1: eine seitliche Ansicht eines selbstfahrenden Mähdreschers mit einem Schneidwerk,
- Fig. 2: ein Schema der elektronischen Steuereinheit mit den zugehörigen Sensoren und Aktoren,
- Fig. 3: ein Flussdiagramm einer ersten Vorgehensweise der Steuereinheit und
- Fig. 4: ein Flussdiagramm einer zweiten Vorgehensweise der Steuereinheit.

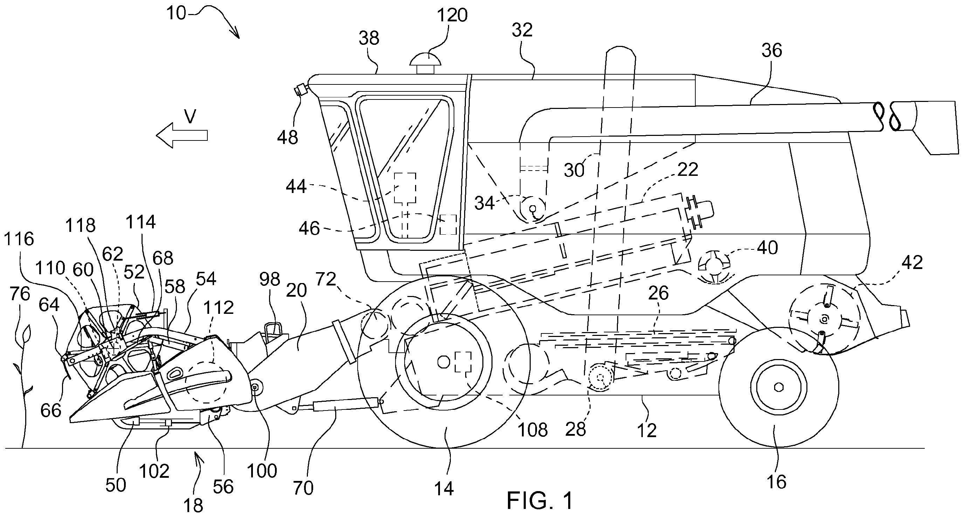

Die Figur 1 zeigt eine selbstfahrende Erntemaschine 10 in der Art eines Mähdreschers. Sie umfasst ein tragendes Fahrgestell 12, das sich durch antreibbare Vorderräder 12 und durch lenkbare Hinterräder 16 auf dem Boden abstützt und durch die Räder 14, 16 in einer Vorwärtsrichtung V über ein Feld bewegbar ist. Die Räder 14 und optional 16 werden durch Antriebsmittel (nicht gezeigt) in Drehung versetzt, um die Erntemaschine 10 über ein abzuerntendes Feld zu bewegen. Im Folgenden beziehen sich Richtungsangaben, wie vorn oder hinten oder seitlich, auf die Vorwärtsrichtung V der Erntemaschine 10, die in der Figur 1 nach links verläuft.

### Erntemaschine

Am vorderen Bereich der Erntemaschine 10 ist ein Erntevorsatz in Form eines Schneidwerks 18 lösbar angebracht, um während des Erntevorgangs Erntegut 76 in Form von Korn oder anderen, druschfähigen Halmfrüchten vom Feld zu ernten und sie nach oben und hinten durch einen Schrägfördererzusammenbau 20 einem axialen Dreschzusammenbau 22 zuzuführen. Das Gemisch aus Korn und anderem Material, das durch Dreschkörbe oder Trennroste des axialen Dreschzusammenbaus 22 tritt, erreicht eine Reinigungseinrichtung 26. Von der Reinigungseinrichtung 26 gewonnenes, sauberes Korn wird durch eine Körnerschnecke 28 einem Kornelevator 30 zugeführt, der es in einen Korntank 32 fördert. Das saubere Korn im Korntank 32 kann durch ein Entladesystem mit einer Querförderschnecke 34 und einem Entladeschneckenförderer 36 auf ein Transportfahrzeug überladen werden. Die durch die axiale Dreschanordnung 22 ausgestoßenen Erntegutreste werden mittels einer Fördertrommel 40 einem Strohhäcksler 42 zugeführt, der sie häckselt und über die Breite des Schneidwerks über das Feld verteilt. Die erwähnten Systeme werden durch einen Verbrennungsmotor angetrieben und werden durch einen Bediener in einer Kabine 38 kontrolliert. Die gezeigte, axiale Dreschanordnung 22 mit einem oder mehreren axialen Dresch- und Trennrotoren ist lediglich eine beispielhafte Ausführung und kann durch eine tangentiale Dreschanordnung mit einer oder mehreren Dreschtrommeln und nachfolgenden Strohschüttlern oder Trennrotoren ersetzt werden.

### Schneidwerk

Das Schneidwerk 18 umfasst einen sich hin- und her bewegenden Messerbalken 50, der sich im Wesentlichen über die gesamte Breite des Schneidwerks 18 erstreckt. Der Messerbalken 50 kann, wie im Stand der Technik bekannt, starr oder flexibel sein. Eine Haspel 52 ist am Schneidwerk 18 angebracht und erstreckt sich im Wesentlichen über die gesamte Breite des Schneidwerks 18 (oder einen Teil davon). Die äußeren Enden der Haspel 52 sind an Armen 54 abgestützt, von denen in der Figur 1 nur einer gezeigt wird. Die Arme 54 haben rückwärtige Enden, die um sich quer zur Vorwärtsrichtung erstreckende Achsen am Rahmen 56 des Schneidwerks, 18, der sich ebenfalls über die Breite des Schneidwerks 18 erstreckt, angelenkt sind und sich von dort nach vorn erstrecken. Jeder Arm 54 ist mit einem Aktor 58 in Form eines hydraulischen Zylinders gekoppelt, der schwenkbar am Rahmen 56 und am Arm 54 angelenkt ist. Die Arme 54 und somit die Haspel 52 werden durch ein Verstellen (Einziehen und Ausstrecken) des Aktors 58 abgesenkt und angehoben.

An einem mittigen Rohr 62, das durch einen kontrollierbaren Antrieb 110 während des Erntebetriebs (in Figur 1 im Gegenuhrzeigersinn) in Drehung versetzbar ist, sind über sich radial zum Rohr 62 erstreckende Haspelarme 116 Haspelzinkenträger 64 abgestützt, die sich über die Breite des Schneidwerks 18 oder einen Teil davon erstrecken und an denen Haspelzinken 66 angebracht sind. Ein zweiter Aktor 68 in Form eines hydraulischen Zylinders ist angepasst, die horizontale Position der Haspel 52 zu verstellen, indem er eine Stützlagerung des Rohrs 62 entlang des Arms 54 bewegt. Das Schneidwerk 18 umfasst auch einen Querförderer 112, der als Schneckenförderer (wie gezeigt) oder Förderbänder ausgeführt sein kann, um das vom Messerbalken 50 abgeschnittene Erntegut zur Mitte des Schneidwerks 18 zu fördern und es von dort durch eine rückwärtige Öffnung im Rahmen 56 dem Schrägförderer 20 zuzuführen. Die Höhe des Schneidwerks 18 über dem Boden wird durch einen vierten Aktor 70 definiert, welcher den Schrägförderer 20 und somit das lösbar daran befestigte Schneidwerk 18 um eine sich quer zur Vorwärtsrichtung erstreckende, horizontale Achse 72 gegenüber dem Fahrgestell 12 der Erntemaschine 10 verschwenkt. Der Aktor 70 wird durch eine elektronische Steuereinheit 46 basierend auf einer Bedienereingabe über eine Bedienerschnittstelle 44 oder selbsttätig kontrolliert, wobei die elektronische Steuereinheit 46 das Schneidwerk 18 in einer gewünschten Höhe über dem Boden halt oder es mit einem gewünschten Druck über den Boden führt. Wie im Stand der Technik bekannt, kann das Schneidwerk 18 zusätzlich um eine sich horizontal, in Vorwärtsrichtung erstreckende Achse verschwenken, um der Bodenkontur zu folgen, ebenfalls durch die Steuereinheit 46 und einen zugehörigen Aktor kontrolliert. Ein Aktor 98 kann die Neigung des Schneidwerks 18 um die Querachse gegenüber dem Schrägförderer 20 kontrollieren.

Die Länge des Schneidtisches ist durch einen Aktor 102 kontrollierbar. Demnach ist die horizontale Position des Messerbalkens 50 gegenüber dem Rahmen 56 des Schneidwerks 18 durch den Aktor 102 verstellbar, der durch die Bedienerschnittstelle 44 und die elektronische Steuereinheit 46 kontrolliert wird. Mögliche Ausführungsformen eines Schneidwerks 18 mit längenveränderlichem Schneidtisch sind in der EP 2 803 257 A1 und der WO 03/049532 A1 gezeigt.

Die Haspelzinkenträger64 und somit die Haspelzinken 66 sind gegenüber den Haspelarmen 116 drehbar gelagert, was es ermöglicht, die Haspelzinken 66 über den gesamten Umlauf um das Rohr 62 in einer gewünschten, in der Regel etwa vertikalen Ausrichtung zu halten. Hierzu dienen an sich bekannte Mechanismen (vgl. DE 1 047 516 B, WO 2016/101059 A1, US 8 800 256 B2 und EP 1 297 735 A1, deren Offenbarung durch Verweis mit in die vorliegenden Unterlagen aufgenommen wird), um die Drehstellung der Haspelträgerzinken 64 gegenüber den Haspelarmen 116 abhängig von der Drehstellung der Haspelarme 116 um die Drehachse des Rohrs 62 zu kontrollieren. Die genaue Winkelstellung der Haspelzinkenträger 64 ist über einen Hebel 118 veränderbar, der beispielsweise die Position einer Nockenbahn um die Mittelachse des Rohrs 62 verstellt. Es ist ein weiterer Aktor 114 vorgesehen, um den Hebel 118 zu verstellen. Demnach kann der Aktor 114 den Winkel der Haspelzinkenträger 64 um die Haspelarme 116 variieren.

Der im Stand der Technik (s. DE 1 047 516 B) verwendete Hebelmechanismus zur manuellen Einstellung der Neigung der Haspelzinken 66 wird demnach an einem oder beiden Enden der Haspel 52 durch einen Aktor 114 ersetzt. Dieser kann elektrisch, hydraulisch oder pneumatisch sein. Eine Positionsmessung (Sensor 122) hilft, die tatsächliche Neigung zu bestimmen oder die Wunschneigung schnell anfahren zu können. Die Positionsmessung kann genutzt werden, um beide Seiten synchron verstellen zu können, oder aber auch, um die Neigung über die Breite gezielt versetzt vornehmen zu können. Dabei wird die material- und strukturbedingte Flexibilität der Haspel 52 ausgenutzt. Sollte sich die Haspel 52 aus mehreren, seitlich nebeneinander angeordneten Haspeln 52 zusammensetzen, kann jede Haspel 52 mit einem oder zwei Aktor(en) 114 ausgestattet werden, die untereinander unterschiedlich angesteuert werden können, falls über die Schneidwerksbreite unterschiedliche Erntegutbedingungen vorliegen sollten.

Die Steuereinheit 46 kann zudem einen Aktor 108 zur Vorgabe der Vortriebsgeschwindigkeit der Erntemaschine 10 kontrollieren.

### Kontrolle des Schneidwerks

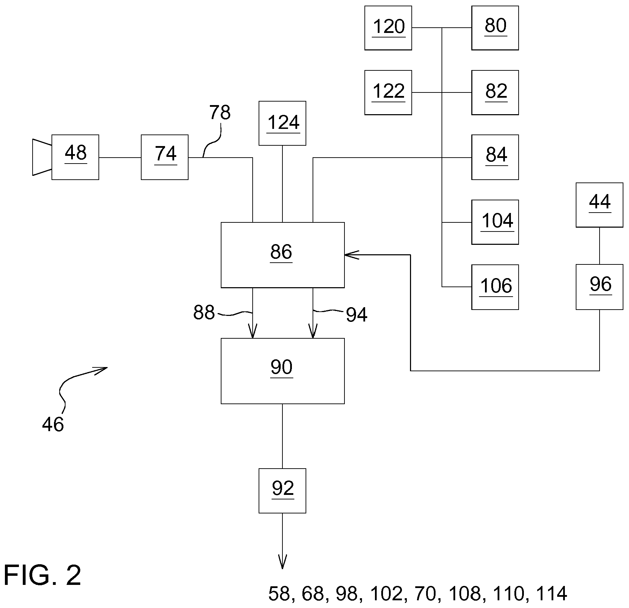

Die Figur 2 zeigt die elektronische Steuereinheit 46 und die angeschlossenen Sensoren und Aktoren im Detail. Die elektronische Steuereinheit 46 umfasst eine Verarbeitungseinheit 86 und eine Kontrolleinheit 90.

Eine Kamera 48 ist an der Vorderseite des Daches der Kabine 38 angebracht und dient dazu, das Erntegut 76 vor der Erntemaschine 10 zu erfassen. Eine Bildverarbeitung 76 erhält die Bildsignale der Kamera 74 und gibt Signale 78 an die Verarbeitungseinheit 86.

Die Verarbeitungseinheit 86 erhält auch Signale von einer Positionsbestimmungseinrichtung 120, einem Sensor 122 zur Erfassung der Position des Aktors 114, einem Sensor 80 zur Erfassung der Position des Aktors 58, einem Sensor 82 zur Erfassung der Position des Aktors 68, einem Sensor 84 zur Erfassung der Position des Aktors 70, einem Sensor 104 zur Erfassung der Position des Aktors 98 und einem Sensor 106 zur Erfassung der Position des Aktors 102. Die Bedienerschnittstelle 44 ist über einen Signalformer 96 mit der Verarbeitungseinheit 86 verbunden, welche zudem mit einem Speicher 124 verbunden ist. Die Kontrolleinheit 90 erhält von der Signalverarbeitungseinheit 86 einerseits Signale 88, die Sollwerte für die Arbeitsparameter bzw. Einstellungen der Aktoren 58, 68, 98, 102, 70, 108, 110, 114 beinhalten und andererseits Signale 94, die Istwerte der Arbeitsparameter bzw. Positionen der Aktoren 58, 68, 98, 102, 70, 108, 110, 114 beinhalten und gibt entsprechende Kontrollsignale an die Aktoren 58, 68, 98, 102, 70, 108, 110, 114 (bzw. zwischen die Kontrolleinheit und die Aktoren 58, 68, 98, 102, 70, 108, 110, 114 geschaltete Treiber oder Ventileinheiten o. dgl.) ab, um die Istwerte der Arbeitsparameter an die Sollwerte anzupassen.

Es wäre auch möglich, auf einen oder mehreren der Sensoren 122, 80, 82, 84, 104 und 106 zu verzichten oder deren Signale zu ergänzen, indem man die Signale der Kamera 48 mit dem Bildverarbeitungssystem 74 auswertet, um die aktuellen Betriebsparameter eines oder mehrerer der Aktoren 58, 68, 98, 102, 70, 108, 114 bzw. die derzeitigen Positionen der vom betreffenden Aktor verstellten Elemente zu bestimmen. Hierzu wird auf die indische Patentanmeldung 201821013464 vom 9.4.2018 verwiesen. Die Signale der Kamera 46 können auch durch das Bildverarbeitungssystem 78 ausgewertet werden, um Lenksignale zur automatischen Führung der Erntemaschine 10 entlang der Bestandskante zu erzeugen und/oder um bestandsdichtenabhängige Geschwindigkeitsvorgabesignale für den Aktor 108 bereitzustellen. Auch die Signale zur Bereitstellung von Sollwerten für die Aktoren 70 und ggf. 98 und ggf. zur Verstellung des Schneidwerks 18 gegenüber dem Schrägförderer 20 in Vorwärtsrichtung V können anhand der Signale der Kamera 48 gewonnen werden.

### Erste Ausführungsform zur Kontrolle des Schneidwerks

Eine erste, mögliche Arbeitsweise der elektronischen Steuereinheit 46 ist in der Figur 3 dargestellt. Hierbei sind im Speicher 124 drei Datensätze für Einstellungen des Aktors 70 zur Vorgabe der Höhe des Schneidwerks 18 über dem Boden, des Aktors 68 für die Position der Haspel 52 in Vorwärtsrichtung V, des Aktors 58 für die vertikale Position der Haspel 52, die Drehzahl des Aktors 110 zur Vorgabe der Drehgeschwindigkeit der Haspel 52 (bzw. des Verhältnisses zwischen Haspeldrehzahl und Vorwärtsgeschwindigkeit der Erntemaschine 10) und des Aktors 114 für den Neigungswinkel der Haspelzinken 66 abgespeichert. Der erste Datensatz entspricht dem normalen Erntebetrieb, der zweite Datensatz in Fahrtrichtung liegendem Lagergetreide und der dritte Datensatz in Querrichtung liegendem Lagergetreide.

Im Schritt 300 überwacht der Bediener den Zustand des Ernteguts 76 vor dem Schneidwerk 18. Durch Betätigen einer zugeordneten Taste an der Bedienerschnittstelle 44 (oder Nicht-Betätigen einer zur Eingabe von Lagergetreide vorgesehenen Taste) kann er der Steuereinheit 46 mitteilen, dass normal stehendes Getreide vorliegt (Schritt 302). Ist das der Fall, wird im Schritt 310 der erste Datensatz abgerufen und im Schritt 316 die Aktoren 70, 68, 58, 110 und 114 anhand des ersten Datensatzes angesteuert. Teilt der Bediener über die Bedienerschnittstelle 44 mit, das Lagergetreide vorliegt, wozu eine entsprechende Taste betätigt werden kann, folgt der Schritt 304, auf den eine Eingabe der Richtung des Lagergetreides durchgeführt werden kann (Schritte 306, 308), wozu weitere Tasten an der Bedienerschnittstelle 44 vorgesehen sein können. Es besteht auch die Möglichkeit, mittels eines kleinen Joysticks an der Bedienerschnittstelle 44 die Eingaben der Schritte 302 bis 308 durchzuführen. Wenn der Joystick in der Ruheposition ist, entspricht das einer Eingabe stehenden Ernteguts 76, während ein nach vorn oder hinten verstellter Joystick in Vorwärtsrichtung V liegendes Lagergetreide und ein zur Seite verstellter Joystick quer zur Vorwärtsrichtung V liegendes Lagergetreide repräsentiert. Analog kann die Bedienerschnittstelle 44 mit Tasten ausgerüstet sein, von denen eine ein in Vorwärtsrichtung V orientiertes Symbol und eine ein quer gerichtetes Symbol, z.B. einen Pfeil, aufweist, wobei das erstgenannte Symbol dem Schritt 306 und das zweitgenannte Symbol dem Schritt 308 zugeordnet ist. Bei in Fahrtrichtung liegendem Lagergetreide wird im Schritt 312 der zweite Datensatz abgerufen und im Schritt 316 die Aktoren 70, 68, 58, 110 und 114 anhand des zweiten Datensatzes angesteuert. Bei quer zur Fahrtrichtung liegendem Lagergetreide wird im Schritt 314 der dritte Datensatz abgerufen und im Schritt 316 die Aktoren 70, 68, 58, 110 und 114 anhand des dritten Datensatzes angesteuert. Mögliche Einzelheiten zu diesen Datensätzen werden in der Diskussion zur zweiten Ausführungsform der Vorgehensweise der Steuereinheit 46 erläutert.

### Zweite Ausführungsform zur Kontrolle des Schneidwerks

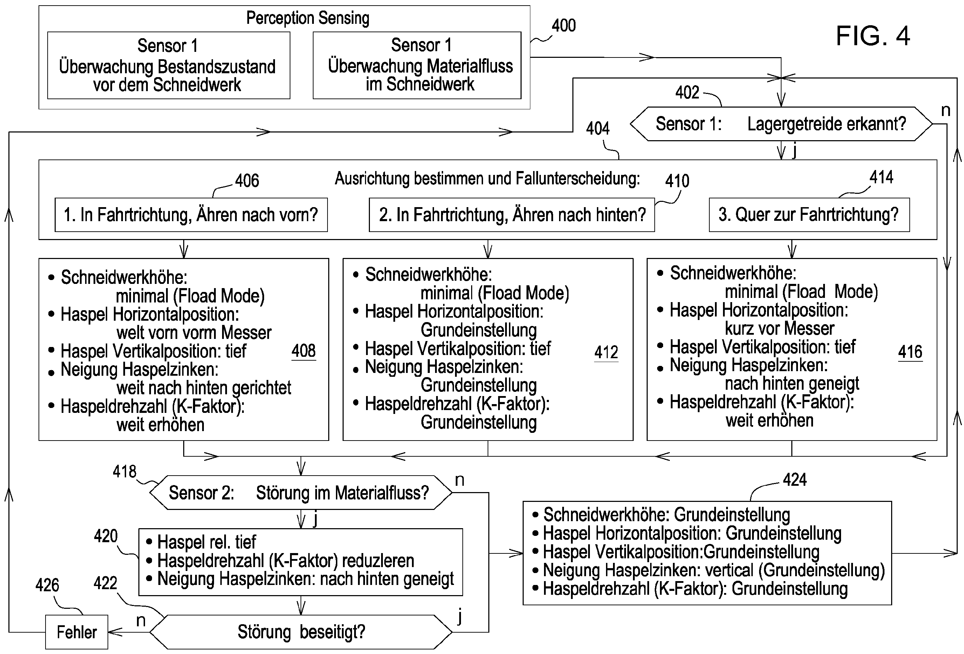

In der Figur 4 wird eine zweite, mögliche Vorgehensweise der elektronischen Steuereinheit 46 dargestellt. Diese automatisierte Vorgehensweise nutzt einen ersten Sensor zur Überwachung des Bestandes des Ernteguts 76 vor dem Schneidwerk 18 und einen zweiten Sensor zur Überwachung des Materialflusses im Schneidwerk 18. Vorzugsweise übernimmt die Kamera 48 mit dem Bildverarbeitungssystem 74 die Aufgaben beider Sensoren.

Der erste Sensor dient dazu, eventuell vor dem Schneidwerk 18 liegendes Lagergetreide zu erkennen. Hierzu wird auf die Offenbarungen der US-Patentanmeldung 62/535043 vom 20. Juli 2017 (veröffentlicht als US 2019/0021226 A1) und der DE 10 2016 215 197 A1 verwiesen, die durch Verweis mit in die vorliegenden Unterlagen aufgenommen werden. Das Bildverarbeitungssystem 74 erkennt demnach anhand der Bildsignale der Kamera 48, ob und ggf. in welcher Orientierung Lagergetreide vor dem Schneidwerk 18 liegt. Diese Information kann alternativ oder zusätzlich schon vorab gewonnen worden sein, z.B. mittels einer mit einer Kamera bestückten Drohne, die über das Feld geflogen ist, und in einer Karte im Speicher 124 abgelegt sein und anhand der mit der Positionsbestimmungseinrichtung 120 bestimmten Position und Fahrtrichtung der Erntemaschine 10 ausgelesen werden.

Der zweite Sensor dient dazu, den Materialfluss im Schneidwerk 18 zu überwachen, insbesondere im Annahmebereich, d.h. im Bereich vom Messerbalken 50 bis zum Querförderer 112. Auch hier kann die Kamera 48 geeignete Bilder liefern, die vom Bildverarbeitungssystem 74 ausgewertet werden. Hierzu sei auf die Offenbarungen der EP 2 143 316 A1 und der DE 10 2016 202 628 A1 verwiesen, die durch Verweis mit in die vorliegenden Unterlagen aufgenommen werden.

Im Schritt 400 erhält die Verarbeitungseinheit 86 demnach die Signale 78 vom Bildverarbeitungssystem, die auf eventuelles Lagergetreide oder Störungen im Materialfluss im Annahmebereich des Schneidwerks 18 hinweisen.

Auf den Schritt 400 folgt der Schritt 402, in dem abgefragt wird, ob der erste Sensor Lagergetreide erkannt hat. Ist das nicht der Fall, folgt der Schritt 418, in dem abgefragt wird, ob der Verarbeitungseinheit 86 Signale vom zweiten Sensor (d.h. dem Bildverarbeitungssystem 74) darauf hinweisen, dass eine Störung im Materialfluss im Annahmebereich des Schneidwerks 18 zwischen Messerbalken 50 und Querförderer 112 vorliegt. Ist das nicht der Fall, folgt der Schritt 424, in dem die Verarbeitungseinheit 86 eine Reihe an Grundeinstellungen für die Aktoren 70, 68, 58, 110 und 114 aus dem Speicher 124 abruft. Diese Grundeinstellungen können zuvor durch den Bediener eingegeben worden sein oder werksseitig fest vorgegeben werden. Die Aktoren 70, 68, 58, 110 und 114 werden demnach mit sinnvollen Arbeitsparametern betrieben, die in üblichen Bedingungen (stehendes Erntegut 76) gut geeignet sind. Die Haspel 52 soll den Einzug des Getreides nur leicht unterstützen. Alle Einstellungen sind so, dass durch die Haspel 52 keine Körner aus den Ähren gelöst werden, bzw. gelöste Körner nicht vor dem Schneidwerk auf den Boden fallen können. Die Haspelzinken 66 sollten nahezu senkrecht oder nur ganz leicht nach hinten gestellt stehen. Die Haspel 52 taucht erst kurz vor dem Messerbalken 50 in den Bestand 76 ein. Die Haspel 52 steht in einer Höhe, sodass die Haspelzinkenträger 64 die Spitzen der Ähren nur leicht berühren können. Beim Eintauchen der Haspelzinken 66 soll die Relativbewegung zwischen Haspelzinken 66 und Ähren nur minimal sein. Die horizontale Komponente der Haspelgeschwindigkeit ist nur etwas höher als die Fahrgeschwindigkeit, sodass das abgeschnittene Getreide nur leicht in das Schneidwerk 18 hineingeschoben wird. Das Verhältnis Haspeldrehzahl / Fahrgeschwindigkeit wird mit bereits allgemein üblichen Systemen zur Haspeldrehzahlregelung festgelegt. Diese Einstellung der vier Parameter kann als "Grundeinstellung" gespeichert und durch Aktivierung einer zugeordneten Taste der Bedienerschnittstelle 44 jederzeit schnell angesteuert werden, analog zu Schritt 310 der Figur 3.

Ergibt sich in Schritt 402 hingegen, dass der erste Sensor Lagergetreide erkennt, folgt der Schritt 404, in dem die Ausrichtung des Lagergetreides anhand der Signale des ersten Sensors durch das Bildverarbeitungssystem 74 bestimmt wird, wozu wieder auf die Offenbarungen der US-Patentanmeldung 62/535043 vom 20. Juli 2017 (veröffentlicht als US 2019/0021226 A1) und der DE 10 2016 215 197 A1 verwiesen wird.

Liegt das Lagergetreide in Fahrtrichtung mit den Ähren nach vorn (Schritt 406), folgt der Schritt 408, in dem die Schneidwerkshöhe (Aktor 70) auf ein Minimum gebracht wird, d.h. das Schneidwerk 18 wird mit einer Schwimmstellung des Aktors 70 betrieben. Die Haspel 52 wird mit dem Aktor 68 möglichst weit nach vorn verschoben, sodass sich der tiefste Punkt der Bahn der Haspelzinken 66 weit vor dem Messerbalken 50 befindet. Die Haspel 52 wird mit dem Aktor 68 in eine relativ niedrige Position verbracht, die unterhalb der Grundposition gemäß Schritt 424 liegt. Die Neigung der Haspelzinken 66 wird mit dem Aktor 114 weit nach hinten verstellt, d.h. die Haspelzinken 66 erstrecken sich auf dem tiefsten Punkt ihrer Bahn vom Haspelzinkenträger 64 relativ schräg nach hinten und unten, z.B. unter einem Winkel von ca. 45° oder bis zu 60°. Zudem wird die Drehzahl der Haspel 52 durch den Aktor 110 erhöht, sodass der so genannte K-Faktor, der zur Bestimmung der Drehzahl mit der Vorwärtsgeschwindigkeit der Erntemaschine 10 multipliziert wird, weit höher als in der Grundeinstellung (Schritt 424) liegt. Diese Einstellungen eignen sich besonders gut zur Aufnahme von Lagergetreide, dessen Ähren vom Schneidwerk 18 weg nach vorn zeigen, insbesondere innerhalb eines Winkelbereichs von +/- 60° gegenüber der Vorwärtsrichtung V.

Bei derartigen Bedingungen sind Ährenheber in der Regel wirkungslos. Die Haspelzinken 66 sollen weit vor dem Messerbalken 50 unter die Ähren greifen, das Erntegut 76 (Getreide) anheben, so dass es geschnitten werden kann und dann in das Schneidwerk 18 heben. Die Haspelzinken 66 werden daher weit nach hinten gestellt, bei sehr flach liegendem Getreide bis zu 60°. Sie sollen sich unter die liegenden Ähren schieben können. Die Haspel 52 wird weit nach vorn gestellt, sodass die Haspelzinkenträger 64 bereits weit vor dem Messerbalken 50 den tiefsten Bahnpunkt erreichen und anschließend wieder nach oben kommen. Die Haspel 52 ist so tief gestellt, dass sich die Haspelzinken 66 unter die Ähren schieben können. Die Drehzahl der Haspel 52 wird deutlich erhöht, damit das Erntegut 76 vor dem Schnitt ausreichend angehoben werden kann. Die minimale Drehzahl ist so, dass mindestens die Ähren abgeschnitten werden. Mit weiter steigender Haspeldrehzahl kann auch das Stroh tiefer abgeschnitten werden. Die Ausnutzung dieses Spielraumes ist nützlich, wenn weniger nasses Stroh in die Maschine kommen soll (es besteht ein hohes Risiko, dass liegendes Stroh nässer ist) oder Lagergetreide nur auf einen Teil über der Schnittbreite vorhanden ist (das Risiko, dass die Haspel in dem Bereich mit stehenden Getreide wickelt, steigt mit zunehmender Drehzahl). Diese Einstellung der vier Parameter kann für den Schritt 312 der Figur 3 ebenfalls als kundenspezifische Einstellung für in Fahrtrichtung liegendes Lagergetreide gespeichert und über eine zugeordnete Taste der Bedienerschnittstelle 44 angefahren werden.

Liegt das Lagergetreide in Fahrtrichtung mit den Ähren nach hinten (Schritt 410), folgt der Schritt 412, in dem die Schneidwerkshöhe (Aktor 70) auf ein Minimum gebracht wird, d.h. das Schneidwerk 18 wird mit einer Schwimmstellung des Aktors 70 betrieben. Die Haspel 52 wird mit dem Aktor 68 in ihrer Vorwärtsrichtung in die Grundposition (wie im Schritt 424) gestellt. Die Haspel 52 wird mit dem Aktor 68 in eine relativ niedrige Position verbracht, die unterhalb der Grundposition gemäß Schritt 424 liegt. Die Neigung der Haspelzinken 66 wird mit dem Aktor 114 in die Grundposition (wie im Schritt 424) gestellt. Zudem wird die Drehzahl der Haspel 52 durch den Aktor 110 in die Grundposition (wie im Schritt 424) gestellt. Diese Einstellungen eignen sich besonders gut zur Aufnahme von Lagergetreide, dessen Ähren zum Schneidwerk 18 hin zeigen, insbesondere innerhalb eines Winkelbereichs von +/-60° gegenüber der Vorwärtsrichtung V.

In diesem Fall sollten Ährenheber gut unter das Getreide 76 fahren und es anheben können. Da sich bis zum Abschneiden der Schneidwerkstisch förmlich unter das Getreide 76 schiebt rutscht es in der Regel auch ohne zusätzliche Unterstützung leicht in das Schneidwerk 18. Die Haspelzinken 66 bleiben senkrecht gestellt. Die Horizontalposition und die Drehzahl bleichen in der Grundeinstellung. Liegt das Getreide über die gesamte Schnittbreite oder zumindest über den größten Teil der Schnittbreite kann die Haspel gesenkt werden, um den Einzug zu unterstützen. Liegt es nur auf einem Teil über die Schnittbreite bleibt die Haspel in Höhe der Grundeinstellung, bzw. in Höhe entsprechend des Ährenhorizonts im stehenden Bereich. Es besteht auch die Möglichkeit, die Einstellungen nach Schritt 412 für eine Einstellung der Figur 3 für den Fall in Fahrtrichtung liegenden, mit den Ähren nach hinten orientierten Ernteguts 76 als kundenspezifische Einstellung zu speichern und über eine zugeordnete Taste der Bedienerschnittstelle 44 anzufahren.

Liegt das Lagergetreide quer zur Fahrtrichtung (Schritt 414), folgt der Schritt 416, in dem die Schneidwerkshöhe (Aktor 70) auf ein Minimum gebracht wird, d.h. das Schneidwerk 18 wird mit einer Schwimmstellung des Aktors 70 betrieben. Die Haspel 52 wird mit dem Aktor 68 nach vorn verschoben, sodass sich der tiefste Punkt der Bahn der Haspelzinken 66 geringfügig vor dem Messerbalken 50 befindet. Die Haspel 52 wird mit dem Aktor 68 in eine relativ niedrige Position verbracht, die unterhalb der Grundposition gemäß Schritt 424 liegt. Die Neigung der Haspelzinken 66 wird mit dem Aktor 114 nach hinten verstellt, d.h. die Haspelzinken 66 erstrecken sich auf dem tiefsten Punkt ihrer Bahn vom Haspelzinkenträger 64 nach hinten und unten, aber weniger steil als im Schritt 408. Zudem wird die Drehzahl der Haspel 52 durch den Aktor 110 erhöht, sodass der so genannte K-Faktor, der zur Bestimmung der Drehzahl mit der Vorwärtsgeschwindigkeit der Erntemaschine 10 multipliziert wird, weit höher als in der Grundeinstellung (Schritt 424) liegt. Diese Einstellungen eignen sich besonders gut zur Aufnahme von quer vor dem Schneidwerk 18 liegenden Lagergetreide.

Auch in diesem Fall ist nicht sicher, ob Ährenheber immer ausreichend unter das Lagergetreide gelangen oder ob sie über einen Teil des liegenden Getreides gleiten und diesen Anteil sogar nach unten drücken. Die Haspel 52 kann helfen, das Getreide 76 auf die Ährenheber zu legen. Die Einstellung der Haspelparameter erfolgt wie im Schritt 408, mit dem Unterschied, dass die Haspel 52 jetzt kurz vor den Ährenheber in das Getreide eingreift. Werden keine Ährenheber verwendet dann erst kurz vor dem Messerbalken 50. Diese Einstellung der vier Parameter kann für den Schritt 314 der Figur 3 ebenfalls als kundenspezifische Einstellung für in Fahrtrichtung liegendes Lagergetreide gespeichert und über eine zugeordnete Taste der Bedienerschnittstelle 44 angefahren werden.

In Zwischenstellungen des Lagergetreides, die zwischen den Winkeln nach Schritt 414 einerseits und 406 oder 410 andererseits liegen, besteht die Möglichkeit, dass die Verarbeitungseinheit 86 Zwischenwerte der Schritte 416 einerseits und 408 oder 412 andererseits verwendet.

Auf die Schritte 402, 408, 412 und 416 folgt der bereits oben erwähnte Schritt 418, in dem abgefragt wird, ob der Verarbeitungseinheit 86 Signale vom zweiten Sensor (d.h. dem Bildverarbeitungssystem 74) darauf hinweisen, dass eine Störung im Materialfluss im Annahmebereich des Schneidwerks 18 zwischen Messerbalken 50 und Querförderer 112 vorliegt. Ist das nicht der Fall, folgt der Schritt 424 und anderenfalls der Schritt 420, in dem die Verarbeitungseinheit 86 über die Kontrolleinheit 90 den Aktor 54 anweist, die Haspel 52 (gegenüber der Position nach Schritt 408, 410 oder 412) etwas anzuheben bzw. (direkt ausgehend vom Schritt 402) gegenüber der Normalposition abzusenken und optional die Drehzahl der Haspel 52 durch den Aktor 110 vermindert, sodass der so genannte K-Faktor, der zur Bestimmung der Drehzahl mit der Vorwärtsgeschwindigkeit der Erntemaschine 10 multipliziert wird, niedriger als in der Grundeinstellung (Schritt 424) liegt. Auch können die Haspelzinken 66 nach hinten geneigt eingestellt werden, um sie aggressiver in das gestaute Material eingreifen zu lassen. Die Haspel 52 befindet sich demnach in einer relativ niedrigen Position, bis die Haspelzinken 6 kurz über dem Messerbalken 50 oder über den Schneidtisch streifen. In hartnäckigen Fällen wird zusätzlich die Haspeldrehzahl erhöht.

Im nachfolgenden Schritt 422 wird abgefragt, ob die Störung beseitigt wurde. Ist das der Fall, folgt der Schritt 424 und anderenfalls der Schritt 426. Der Eingriff nach Schritt 420 erfolgt vorzugsweise nur kurzzeitig, einerseits um dem Sensor wieder freie Sicht auf die Störung zu gewähren und den Erfolg der Aktion zu prüfen und andererseits, um das Risiko zu reduzieren, dass die Haspel 52 geschnittenes Getreide überwirft oder gar selbst zu wickeln beginnt. Diese beiden Fälle soll der Sensor ebenfalls erkennen können und spätestens dann einen Eingriff zur Beseitigung der Verstopfung unterbrechen. Das gleiche gilt für Fälle von Lagergetreide, speziell wenn das Getreide nur über eine Teilbreite des Schneidwerks 18 liegt, aber an anderen Stellen steht. Ist die Verstopfung noch nicht beim ersten Mal gelöst, kann die Prozedur nach Schritt 420 optional noch ein- oder mehrere Male wiederholt werden. Erst danach erfolgt nach Misserfolg eine Warnung (Schritt 426), so dass der Bediener selbst eingreifen kann.

Es besteht die Möglichkeit, bei der Vorgehensweise nach Figur 3 an der Bedienerschnittstelle 44 eine Eingabemöglichkeit bereitzustellen, mit welcher der Bediener die Einstellungen nach Schritt 420 abrufen kann, um eine Störung zu beseitigen.

Die von den Flussdiagrammen nach Figur 3 oder 4 erzeugten Einstellungen der Aktoren können in an sich bekannter Weise durch Bedienereingaben mittels der Bedienerschnittstelle 44 übersteuert und somit bei Bedarf verbessert werden. Zudem können sie durch automatische Kontrollkreise mit geschlossenen oder offenen Schleifen noch feinabgestimmt werden.

## Patentansprüche

1. Erntemaschine (10) mit einem Schneidwerk (18), welches mit einem Messerbalken (50) zum Abschneiden von Erntegut (76) von einem Feld, einer oberhalb des Messerbalkens (50) angeordneten Haspel (52) mit Haspelzinken (66) und einem Querförderer (112) zur Abförderung des abgeschnittenen Ernteguts zu einer rückwärtigen Abgabeöffnung ausgestattet ist,
wobei die Haspel (52) um eine Drehachse in Antrieb versetzbare Haspelarme (116), an den Haspelarmen (116) um ihre Längsachsen drehbar abgestützte Haspelzinkenträger (64) mit daran angebrachten Haspelzinken (66) und einen fremdkraftbetätigten, mit einer elektronischen Steuereinheit (46) verbundenen Aktor (114) zur Verstellung des Drehwinkels der Haspelzinkenträger (64) gegenüber den Haspelarmen (116) umfasst
und die elektronische Steuereinheit (46) betreibbar ist, den Aktor (114) abhängig von wenigstens einer Eigenschaft des zu erntenden Ernteguts zu verstellen,
**dadurch gekennzeichnet, dass** die elektronische Steuereinheit (46) mit einem Sensor zur Erkennung vor dem Schneidwerk befindlichen Lagergetreides und von dessen Orientierung und/oder einer abgespeicherten Karte verbunden ist, in der Positionen vor dem Schneidwerk (18) befindlichen Lagergetreides und von dessen Orientierung abgespeichert sind und betreibbar ist, den Aktor (114) abhängig von der Karte und/oder den Signalen des Sensors abhängig von der Anwesenheit und Orientierung von aufzunehmenden Lagergetreide anzusteuern,
und/oder dass die elektronische Steuereinheit (46) mit einem Sensor zur Erkennung von Ungleichmäßigkeiten des Förderverhaltens des Ernteguts im Annahmebereich des Schneidwerks (18) zwischen dem Messerbalken (50) und dem Querförderer (112) verbunden ist und betreibbar ist, den Aktor (114) abhängig den Signalen des Sensors anzusteuern.

2. Erntemaschine (10) nach Anspruch 1, wobei die Steuereinheit (46) betreibbar ist, weitere Aktoren (70, 68, 58, 110) zur Verstellung der Schneidwerkshöhe und/oder der Position der Haspel (52) in Vorwärtsrichtung und/oder der Position der Haspel (52) in vertikaler Richtung und/oder der Geschwindigkeit der Drehung der Haspel (52) basierend auf Signalen wenigstens eines Sensors und/oder in der Karte eingetragenen Daten anzusteuern.

## Claims

1. Harvesting machine (10) comprising a cutting unit (18) which is equipped with a cutting bar (50) for cutting off crop (76) from a field, with a reel (52) which is arranged above the cutting bar (50) and has reel tines (66), and with a cross conveyor (112) for discharging the cut-off crop to a rear dispensing opening,
wherein the reel (52) comprises reel arms (116) which can be driven about a rotation axis, reel tine carriers (64) which are supported on the reel arms (116) rotatably about the longitudinal axes of the reel arms and have reel tines (66) fitted to them, and an actuator (114), which is actuated by external force and is connected to an electronic control unit (46), for adjusting the rotation angle of the reel tine carriers (64) in relation to the reel arms (116)
and the electronic control unit (46) can be operated to adjust the actuator (114) depending on at least one property of the crop to be harvested,
**characterized in that** the electronic control unit (46) is connected to a sensor, for identifying lodged cereal crop located in front of the cutting unit and the orientation of the lodged cereal crop and/or to a stored map in which positions of lodged cereal crop located in front of the cutting unit (18) and the orientation of the lodged cereal crop are stored, and can be operated to drive the actuator (114) depending on the map and/or the signals from the sensor depending on the presence and orientation of lodged cereal crop to be picked up,
and/or **in that** the electronic control unit (46) is connected to a sensor, for identifying non-uniformities in the conveying behaviour of the crop in the receiving region of the cutting unit (18) between the cutting bar (50) and the cross conveyor (112), and can be operated to drive the actuator (114) depending on the signals from the sensor.

2. Harvesting machine (10) according to Claim 1, wherein the control unit (46) can be operated to drive further actuators (70, 68, 58, 110) for adjusting the cutting unit height and/or the position of the reels (52) in the forward direction and/or the position of the reels (52) in the vertical direction and/or the speed of the rotation of the reels (52) based on signals from at least one sensor and/or data entered in the map.

## Revendications

1. Moissonneuse (10) comprenant un mécanisme de coupe (18) qui est équipé d'une barre de coupe (50) pour couper la récolte (76) sur un champ, un rabatteur (52) disposé au-dessus de la barre de coupe (50) et muni de dents de rabatteur (66) et un convoyeur transversal (112) pour évacuer la récolte coupée jusqu'à une ouverture de distribution,
dans laquelle le rabatteur (52) comprend des bras de rabatteur (116) pouvant être mis en mouvement autour d'un axe de rotation, des supports de dents de rabatteur (64) en appui rotatif autour de leurs axes longitudinaux sur les bras de rabatteur (116) avec des dents de rabatteur (66) rattachées à ceux-ci, et un actionneur (114) actionné par une force extérieure et relié à une unité de commande électronique (46) pour ajuster l'angle de rotation des supports de dents de rabatteur (64) par rapport aux bras de rabatteur (116),
et l'unité de commande électronique (46) peut fonctionner pour ajuster l'actionneur (114) en fonction d'au moins une propriété de la récolte à récolter,
**caractérisée en ce que** l'unité de commande électronique (46) est reliée à un capteur pour identifier des céréales couchées se trouvant devant le mécanisme de coupe et l'orientation de celles-ci, et/ou à une carte sauvegardée dans laquelle sont sauvegardées des positions de céréales couchées se trouvant devant le mécanisme de coupe (18) et l'orientation de celles-ci, et qui peut fonctionner pour piloter l'actionneur (114) en fonction de la carte et/ou des signaux du capteur en fonction de la présence et de l'orientation de céréales couchées à ramasser,
et/ou **en ce que** l'unité de commande électronique (46) est reliée à un capteur pour identifier des irrégularités dans le comportement de convoyage de la récolte dans la zone de réception du mécanisme de coupe (18) entre la barre de coupe (50) et le convoyeur transversal (112), et peut fonctionner pour piloter l'actionneur (114) en fonction des signaux du capteur.

2. Moissonneuse (10), selon la revendication 1, dans laquelle l'unité de commande (46) peut fonctionner pour piloter des actionneurs supplémentaires (70, 68, 58, 110) pour ajuster la hauteur du mécanisme de coupe et/ou la position du rabatteur (52) dans la direction avant et/ou la position du rabatteur (52) dans la direction verticale et/ou la vitesse de la rotation du rabatteur (52) sur la base d'au moins un capteur et/ou de données inscrites sur la carte.
